# EUROPEAN PATENT APPLICATION

(11) **EP 4 596 756 A1**
(43) Date of publication of application: **06.08.2025**
(21) Application number: 24307036.4
(22) Date of filing: 05.12.2024
(51) Int. Cl.: C25B 1/04, C25B 9/70, C25B 9/77, C25B 15/08

(54) **HYDROGEN PRODUCTION FACILITY AND METHOD**

(30) Priority: 31.01.2024 FR 2400933; 14.10.2024 EP 24306686
(71) Applicant: Technip Energies France, 92741 Nanterre Cedex (FR); Rely S.A., 1210 Brussels (BE)
(72) Inventor: DE SORBIER, Thibault, 92741 Nanterre Cedex (FR); LEYMARIOS, Gael, 92741 Nanterre Cedex (FR); MAZINGAND, Hervé, 92741 Nanterre Cedex (FR); CONSTANS, Jean-Francois, 92741 Nanterre Cedex (FR); GODDIN, Christophe, 1210 Brussels (BE)
(74) Representative: Edson, Russell Gregory

(57) **Abstract**

Aspects of the present disclosure relate to a hydrogen production facility. The hydrogen production facility includes one or more electrolyser stacks to electrolyze water using an electrolyte and generate a hydrogen-aqueous solution mixture and an oxygen-aqueous solution mixture, the one or more electrolyser stacks comprising a plurality of membranes. The facility also includes a hydrogen separator to produce a flow of hydrogen from the hydrogen-aqueous solution mixture and an oxygen separator to produce a flow of oxygen from the oxygen-aqueous solution mixture. The hydrogen separator comprises a hydrogen gas-liquid separation device and a hydrogen coalescing device. The oxygen separator comprises an oxygen gas-liquid separation device and an oxygen coalescing device.

## Description

### Technical Field

The present disclosure relates to a hydrogen production system. In particular the disclosure relates to hydrogen production through electrolysis.

### Background

Hydrogen can be an alternative energy source to hydrocarbons because it is an easily storable source of energy as compared to electricity, and its oxidation releases a very high amount of energy. Hydrogen can be produced using electrolysis to separate water into hydrogen and oxygen. Produced hydrogen can be green hydrogen and used as a clean energy source, transported easily, and stored easily. Electrolysis can involve circulating electrolyte on both sides of membranes of electrolyser stacks.

### Statements

According to an aspect, there is provided a hydrogen production facility comprising: one or more electrolyser stacks to electrolyze water using an electrolyte and generate a hydrogen-aqueous solution mixture and an oxygen-aqueous solution mixture, the one or more electrolyser stacks comprising a plurality of membranes; a hydrogen separator to produce a flow of hydrogen from the hydrogen-aqueous solution mixture; and an oxygen separator to produce a flow of oxygen from the oxygen-aqueous solution mixture; wherein the hydrogen separator comprises a hydrogen gas-liquid separation device and a hydrogen coalescing device, and wherein the oxygen separator comprises an oxygen gas-liquid separation device and an oxygen coalescing device.

The hydrogen production facility may comprise a plurality of electrolyser stacks. One or more of the plurality of electrolyser stacks may be fluidly coupled with the hydrogen separator and/or the oxygen separator.

The hydrogen separator and the oxygen separator may be coupled using a pressure balancing line to balance pressure between the oxygen separator and the hydrogen separator and to prevent or reduce a pressure differential across the plurality of membranes.

The pressure balancing line may couple the hydrogen separator and the oxygen separator at a point downstream of the hydrogen coalescing device and the oxygen coalescing device.

The hydrogen coalescing device and/or the oxygen coalescing device may be at least one of: a membrane-type coalescer, an ultrasonic coalescer, or a centrifugal coalescer.

The hydrogen gas-liquid separation device and/or the oxygen gas-liquid separation device may comprise a gravity separator.

The hydrogen coalescing device may be positioned downstream to the hydrogen gas-liquid separation device and/or the oxygen coalescing device may be positioned downstream to the oxygen gas-liquid separation device.

The hydrogen coalescing device may be positioned upstream to the hydrogen gas-liquid separation device and/or the oxygen coalescing device may be positioned upstream to the oxygen gas-liquid separation device.

The hydrogen coalescing device may be integrated with the hydrogen gas-liquid separation device and/or the oxygen coalescing device may be integrated with the oxygen gas-liquid separation device.

One or more hydrogen coalescing devices may be provided adjacent an external wall of the hydrogen gas-liquid separation device and/or one or more oxygen coalescing devices may be provided adjacent an external wall of the oxygen gas-liquid separation device.

The hydrogen coalescing device may comprise one or ultrasonic generators provided adjacent an external wall of the hydrogen gas-liquid separation device and/or wherein the oxygen coalescing device comprises one or more ultrasonic generators provided adjacent an external wall of the oxygen gas-liquid separation device.

The oxygen separator and/or the hydrogen separator may include a single recovery unit comprising the respective gas-liquid separation device and the respective coalescing device.

The pressure balancing line may extend between an outlet of the hydrogen separator and an outlet of the oxygen separator such that said outlet of the hydrogen separator is fluidly coupled to said outlet of the oxygen separator via the pressure balancing line.

The pressure balancing line to balance pressure between the oxygen separator and the hydrogen separator may be positionable to couple at a lower portion of each of the oxygen separator and the hydrogen separator.

Each of the oxygen separator and hydrogen separator may comprise a vessel.

The pressure balancing line to balance pressure between the oxygen separator and the hydrogen separator may be configured so as to couple, or to be couplable, at a lower portion of each of the oxygen separator and the hydrogen separator when installed for operation of the hydrogen production facility.

The lower portion of each of the oxygen separator and the hydrogen separator may be a region in which liquid would gather due to gravitational effects and/or from which gas or gas bubbles would be displaced by an accumulation of liquid or other more dense material.

The pressure balancing line may be configured so as to couple, or to be couplable, to provide fluid communication between a first region within a vessel of the hydrogen separator and a second region within a vessel of the oxygen separator. The first region may be at or proximal to a base of a vessel of the hydrogen separator. The second region may be at or proximal to a base of a vessel of the oxygen separator.

The pressure balancing line may be arranged to provide fluid communication between the first region and the second region.

The pressure balancing line may extend between the first region and the second region. The pressure balancing line may extend directly between the first region and the second region.

The pressure balancing line may comprise a fluid conduit having a first end extending into the first region, and a second end extending into the second region.

The pressure balancing line may extend between a base of a vessel of the hydrogen separator and a base of a vessel of the oxygen separator.

The pressure balancing line may comprise a fluid conduit having a first end extending through a base of a vessel of the hydrogen separator, and a second end extending through a base of a vessel of the oxygen separator.

Each of the oxygen separator and hydrogen separator may comprises a vessel, and the pressure balancing line extends between a base of the vessel of the hydrogen separator and a base of the vessel of the oxygen separator

The vessel of the hydrogen separator and the oxygen separator between which the pressure balancing line extends may be a vessel of the respective coalescing devices or a vessel of the respective gas-liquid separation devices.

The pressure balancing line may direct connects the oxygen separator and the hydrogen separator.

The pressure balancing line may comprise a fluid conduit extending directly between the oxygen separator and the hydrogen separator.

Each coalescing device may be configured to recover at least part of the electrolyte.

The hydrogen-aqueous solution mixture may comprise at least hydrogen and the electrolyte.

The hydrogen coalescing device may be configured to recover at least part of the electrolyte from the hydrogen-aqueous solution mixture.

The oxygen-aqueous solution mixture may comprise at least oxygen and the electrolyte.

The oxygen coalescing device may be configured to recover at least part of the electrolyte from the oxygen-aqueous solution mixture.

The pressure balancing line may extend between the hydrogen coalescing device and the oxygen coalescing device.

The pressure balancing line may extend between a liquid outlet of the hydrogen coalescing device and a liquid outlet of the oxygen coalescing device.

The hydrogen production facility may further comprise a recycle line configured to recycle the electrolyte from the hydrogen separator and/or the oxygen separator to the one or more electrolyser stacks.

The recycle line may extend from the hydrogen coalescing device and/or from the oxygen coalescing device to the one or more electrolyser stacks.

The recycle line may comprise a fluid conduit extending from the hydrogen coalescing device and/or from the oxygen coalescing device to the one or more electrolyser stacks. A pump may be provided in the or each fluid conduit.

The recycle line may be connected to or mutualized with the pressure balancing line such that electrolyte in the pressure balancing line is recyclable to the one or more electrolyser stacks via the recycle line.

The recycle line may comprise a fluid conduit extending from the pressure balancing line to the one or more electrolyser stacks. A pump may be provided in the fluid conduit.

The hydrogen gas-liquid separation device and/or the oxygen gas-liquid separation device may be or may comprise a vertical separator vessel.

The hydrogen coalescing device and/or the oxygen coalescing device may be an ultrasonic coalescer provided at a lower region of the respective gas-liquid separation device. The ultrasonic coalescer may be provided at a lower region of the respective vertical separator vessel.

The hydrogen coalescing device and/or the oxygen coalescing device may be located at an outlet of the one or more electrolyser stacks.

The hydrogen production facility may further comprise a collector line mutualized with the hydrogen gas-liquid separation device and/or the oxygen gas-liquid separation device.

The collector line may be arranged in fluid communication with an outlet of the one or more electrolyser stacks. The oxygen coalescing device and/or the hydrogen coalescing device may be located at or along the collector line.

According to a further aspect, there is provided a method comprising: generating a hydrogen-aqueous solution mixture and an oxygen-aqueous solution mixture using a one or more electrolyser stacks to electrolyze water using an electrolyte; producing a flow of hydrogen from the hydrogen-aqueous solution mixture using a hydrogen separator; and producing a flow of oxygen from the oxygen-aqueous solution mixture using an oxygen separator; wherein each of the hydrogen separator and oxygen separator comprises a gas-liquid separation device and a coalescing device.

The method may further comprise preventing or reducing a pressure differential across at least one membrane of the one or more electrolyser stacks for a hydrogen production facility by using a pressure balancing line to couple the hydrogen separator with the oxygen separator. The pressure balancing line may couple the hydrogen separator with the oxygen separator at a point downstream of the respective coalescing devices.

The one or more electrolyser stacks may be fluidly connected to the hydrogen separator and the oxygen separator.

Any or all of the features described in relation to the first aspect may be applied to the method above.

According to an aspect of the disclosure, there is provided a hydrogen production facility comprising: a plurality of electrolysers to electrolyze water using an electrolyte and generate a hydrogen-aqueous solution mixture, the plurality of electrolysers comprising a plurality of membranes; at least one gas-liquid separation device to produce a flow of hydrogen from the hydrogen-aqueous solution mixture; and a hydrogen separator and an oxygen separator coupled to the hydrogen separator using a line to balance pressure between the oxygen separator and the hydrogen separator and to prevent a pressure differential across the plurality of membranes; and/or a hydrogen aqueous-solution-recovering device and an oxygen aqueous-solution-recovering device coupled to the hydrogen aqueous-solution-recovering device using a line to balance pressure between the oxygen aqueous-solution-recovering device and the hydrogen aqueous-solution-recovering device and to prevent a pressure differential across the plurality of membranes; and/or a hydrogen coalescer and an oxygen coalescer coupled to the hydrogen separator using a line to balance pressure between the oxygen coalescer and the hydrogen coalescer and to prevent a pressure differential across the plurality of membranes.

The line to balance pressure between the oxygen separator and the hydrogen separator may be a pressure balancing line.

The line to balance pressure between the oxygen separator and the hydrogen separator may be positionable to couple at a lower portion of each of the oxygen separator and the hydrogen separator.

Each of the oxygen separator and the hydrogen separator may comprise:
a primary separator to remove at least some bubbles from the electrolyte; and
a coalescer positioned downstream to the primary separator.

The coalescer may be at least one of a membrane-type coalescer, an ultrasonic coalescer, or a centrifugal coalescer.

The primary separator may be a vertical primary separator vessel.

The hydrogen production facility may further comprise a collector line mutualized with the primary separator.

According to an aspect of the disclosure there is provided a method comprising: preventing a pressure differential across at least one membrane of an electrolyzer for a hydrogen production facility by: using a line to couple a hydrogen separator with an oxygen separator, and/or using a line to couple a hydrogen aqueous-solution-recovering device to an oxygen an aqueous-solution-recovering device, and/or using a line to couple a hydrogen coalescer to an oxygen coalescer; and producing, by at least one gas-liquid separation device, a flow of hydrogen from a hydrogen-aqueous solution mixture from the electrolyzer.

The line to balance pressure between the oxygen separator and the hydrogen separator may be a pressure balancing line.

### Brief Description of the Drawings

One or more examples will now be described, by way of example only, with reference to the accompanying drawings, in which:
Figure 1 shows a schematic block diagram of a hydrogen-production system according to an example of the disclosure;
Figure 2 shows a block diagram of a hydrogen production system according to an example of the disclosure;
Figure 3 shows a block diagram of a hydrogen production system according to an example of the disclosure;
Figure 4 shows a block diagram of a hydrogen production system according to an example of the disclosure;
Figure 5 shows a block diagram of a hydrogen production system according to an example of the disclosure;
Figure 6 shows a block diagram of a hydrogen production system according to an example of the disclosure;
Figure 7 shows a schematic hydrogen separator or oxygen separator according to an example of the disclosure;
Figure 8 shows a schematic hydrogen separator or oxygen separator according to an example of the disclosure;
Figure 9 shows a schematic hydrogen separator or oxygen separator according to an example of the disclosure;
Figure 10 shows a schematic coalescing device according to an example of the disclosure;
Figure 11 shows a schematic coalescing device according to an example of the disclosure; and
Figure 12 shows a schematic of a method.

### Detailed Description

The inventors have identified that a membrane within an electrolysis cell stack may be sensitive to pressure differential between the sides of the membrane, which may result in a membrane rupture or leakage or a degradation of performance. As an example, Alkaline electrolysis involves circulating electrolyte on both side of membranes of electrolysers stacks. Gases produced can be carried by the electrolyte and can be separated to recover hydrogen and oxygen in respective separation devices. An electrolyser can include multiple electrolysis cells, dedicated circuits for collecting the electrolyte, gas-liquid separation devices, and electrolyte filtering, pumping and cooling devices. Upscaling electrolysis plants can involve installing several electrolyser stacks in parallel. In these conditions, the electrolyte circulation/separation system can be mutualized for both economic and safety reasons. But, mutualization can result in managing electrolyte circulation globally through longer and more complex pipeline networks, leading to complex flow behavior that may result in slug flow-regime. It is desired for slugs to be avoided because of the erratic evolution of pressure their presence can generate at the outlet of the cell stacks. Pressure variations, between both side of the cells stack membranes, can be harmful to the membrane and membrane-relating equipment inside the stacks, separating hydrogen-rich electrolyte and oxygen-rich electrolyte.

In addition, the separators of both electrolyte loops can operate at the same operating pressure, and the pressure can be controlled in the gas phase of each separator. Unexpected depressurization or overpressure of one separator compared to the second one can lead to high pressure differential through the electrolyser stack, which can endanger the integrity of the membranes inside the stack. High pressure differential through the stack can lead to leakage in the system, for example hydrogen to oxygen or oxygen to hydrogen leakage, which can further reduce the integrity of the membranes.

Certain aspects and features of the present disclosure relate to separators for use in an electrochemical hydrogen production system, such as mutualized large-scale electrochemical hydrogen production systems. The separator system can be used to mitigate membrane damage due to pressures. For example, the separator system can be provided with a set of pressure balancing safeguarding features to accommodate membrane frailness, taking into account the additional constraints of the electrolyte-purifying equipment as well.

The separators of both electrolyte loops may operate normally at the same operating pressure, and the pressure can be controlled in the gas phase of each separator. Unexpected depressurization or overpressure of one separator compared to the second one may result in high pressure differential through the electrolyser stack, which may endanger the integrity of the membranes inside the stack. The stack pressure differential from the gas phase pressure differential of both separation vessels can be disconnected.

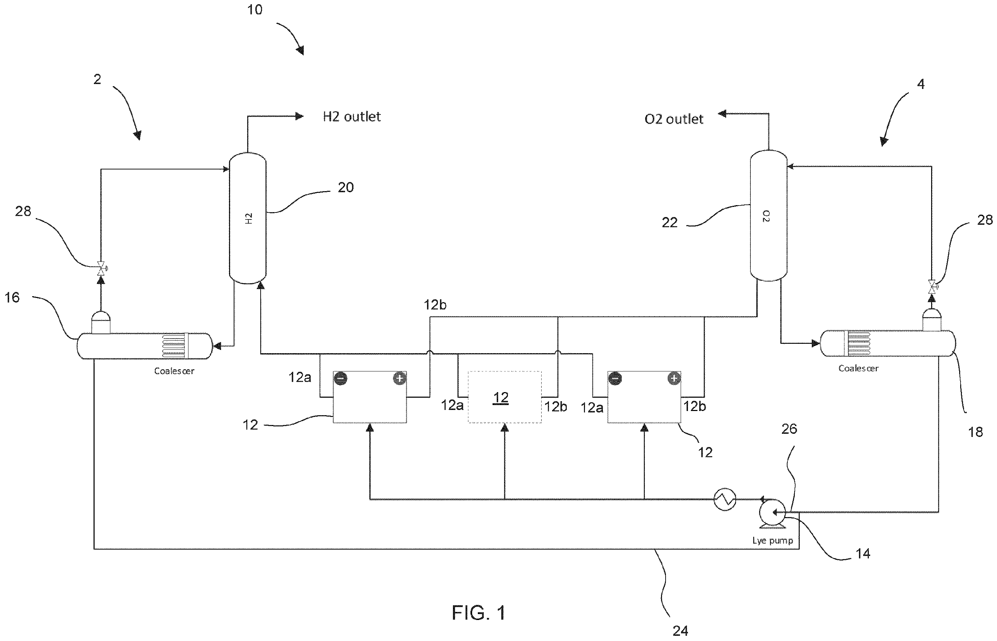

FIG. 1 indicates a schematic block diagram of a hydrogen production facility 10 or hydrogen production system 10. The production facility 10 may include one or more electrolyser stacks 12. In some arrangements, a plurality of electrolyser stacks 12 are provided. One or more of the electrolyser stacks 12 can include a plurality of electrolyser cells. A cell may have an anode, a cathode and a membrane (not shown). The one or more membranes may separate the oxygen side of the system from the hydrogen side of the system. The electrolyser stacks 12 are configured to electrolyze water using an electrolyte to generate a hydrogen-aqueous solution mixture. The hydrogen-aqueous solution mixture includes at least hydrogen and the electrolyte. The electrolyser stacks 12 generate an oxygen-aqueous solution mixture. The oxygen-aqueous solution mixture includes at least oxygen and the electrolyte. The hydrogen-aqueous mixture may be generated at a first outlet 12a of one or more of the respective electrolyser stacks 12. The first outlet 12a may be fluidly connected to the cathode of the electrolyser cell. The oxygen-aqueous mixture may be generated at a second outlet 12b of one or more of the respective electrolyser stacks 12. The second outlet 12b may be fluidly connected to the anode of the electrolyser cell.

The hydrogen production facility/system 10 of Figure 1 further includes a hydrogen separator 2 to produce a flow of hydrogen from the hydrogen-aqueous solution mixture. An oxygen separator 4 is provided to produce a flow of oxygen from the oxygen-aqueous solution mixture. The system 10 may include a pump 14. The hydrogen separator 2 includes a hydrogen gas-liquid separation device 20 (labelled H2 in the figures). The hydrogen gas-liquid separation device 20 may be referred to as a hydrogen recovery vessel in some arrangements. The oxygen separator 4 includes an oxygen gas-liquid separation device 22 (labelled O2 in the figures). The oxygen gas-liquid separation device 22 may be referred to as an oxygen recovery vessel. The hydrogen separator 2 may include a hydrogen coalescing device 16. The oxygen separator 4 may include an oxygen coalescing device 18. The coalescing devices 16, 18 may be referred to as aqueous-solution recovering devices in some arrangements. The coalescing devices 16, 18 may be or include one or more coalescers. In some arrangements, the coalescing device 16, 18 may be provided below or at a lower elevation than the respective gas-liquid separation device 20, 22.

In some examples and as mentioned previously, the stack pressure differential can be disconnected from the gas phase pressure differential of both separation vessels of the electrolysis system. The various elements of the system can be connected by lines to transfer or communicate the various fluids and various pressures between them. These may be standard pressure lines or conduits as used in industrial electrolysis systems. The lines may be provided as a pipeline. The pressure drops in the lines can be controlled upstream of the separation, which may mean upstream of the collector, which can be done by using a suitably configured separation device or by properly sizing the pipeline network.

The hydrogen separator 2 and the oxygen separator 4 can be connected between each other through a line which may be termed a pressure balancing line 24. The pressure balancing line 24 extends between an outlet of the hydrogen separator 2 and an outlet of the oxygen separator 4. In this way, the outlet of the hydrogen separator 2 is fluidly coupled to the outlet of the oxygen separator 4 via the pressure balancing line 24.

The pressure balancing line 24 is positionable to couple at a lower portion of the oxygen separator 4 and the hydrogen separator 2. The pressure balancing line 24 may be positionable and/or arranged to provide fluid communication between a first region of a vessel of the hydrogen separator 2 and a second region within a vessel of the oxygen separator 4. It will be understood that the vessel of the hydrogen separator 2 and oxygen separator 4 connected by the pressure balancing line 24 may be a vessel of the respective gas-liquid separation device 20, 22 or a vessel of the respective coalescing device 16, 18. The first region may be at or proximal to a base of the vessel of the hydrogen separator 2. The second region may be at or proximal to a base of the vessel of the oxygen separator 4. The pressure balancing line 24 may extend directly between the first region and the second region. The pressure balancing line 24 may include a fluid conduit having a first end extending into the first region, and a second end extending into the second region. For example, the pressure balancing line 24 can enter at or toward the lowermost point of the separators 2, 4 to allow the liquid to flow both ways from a side to another and to prevent or at least reduce the risk of any direct displacement of the gaseous phase from one vessel to the other. The pressure at the inlet of the separators can be coupled to the liquid level in the separator. The separator inlet can be at the bottom or near the bottom of the separator (e.g. at or near a base of the respective vessel). If a distributor is considered, there can be a hole at its base. It will be understood that the term "lower" used in relation to a respective separator relates to the orientation of units of the hydrogen production facility 10 upon installation and assembly in the facility 10, e.g. during operation of the facility 10. The "lower" portion of the separators defines a region in which liquid in the respective separator will gather during operation of the facility 10 due to gravitational effects. The "lower" portion may define a region in which gas or gas bubbles (e.g. hydrogen bubbles or oxygen bubbles) will be displaced by an accumulation of liquid or other denser material during operation of the facility 10 due to gravitational effects. Configuring the pressure balancing line 24 to couple the lower portion of the oxygen separator 4 and the hydrogen separator 2 provides fluid communication between regions of the separators 2, 4 in which liquid accumulates (due to gravity). This prevents significant gas bubbles from the separators 2, 4 being present in the pressure balancing line 24. The "lower" portion or region may refer to a region toward a base of a unit when installed and/or operable in the hydrogen production facility 10. The base of a unit refers to a surface upon which denser materials therein tend to move towards under gravity. The "upper" portion or region of a separator 2, 4 or any other component refers to a region distal to the "lower" portion, e.g. the region toward which gas or gas bubbles may be displaced, or a region that is distal to the base of a unit.

As can be seen in the figures, the pressure balancing line 24 directly connects the hydrogen separator 2 and the oxygen separator 4. It will be understood that the term "directly connects" refers to a direct fluid connection between the hydrogen separator 2 and the oxygen separator 4, e.g. the pressure balancing line 24 extends between the separators 2, 4 without passing through any other units or elements of the system external to the respective separators 2, 4. The pressure balancing line 24 may include a fluid conduit extending directly between the oxygen separator 4 and the hydrogen separator 2.

The hydrogen production facility 10 may include a recycle or mutualization line 26. The recycle line 26 is configured to recycle electrolyte from the hydrogen separator 2 and/or the oxygen separator 4 to the plurality of electrolyser stacks 12. Although not shown, it will be appreciated that the recycle line 26 may be mixed with water upstream of the electrolyser stacks 12 or within the electrolyser stacks 12 so as to facilitate electrolysis of water in the electrolyser stacks 12. In the figures, a pump 14 is provided to transport electrolyte in the recycle line 26 to the electrolyser stacks 12. The pump 14 is provided in the recycle line 26 in the illustrated arrangement, for example the recycle line 26 is in the form of a fluid conduit and a pump is provided along the conduit. In the figures, the pump 14 is labelled "lye pump", however, it will be appreciated that the fluid in the recycle line 26 may include any substances (e.g. the electrolyte may be sodium hydroxide in some arrangements, but it will be appreciated that any suitable electrolyte may be utilized). The recycle line 26 may include one or more heat exchangers to alter the temperature of electrolyte in the recycle line (e.g. to reach a target electrolysis temperature prior to introduction into the one or more electrolyser stacks 12). Electrolyte pumping downstream of the separation can be mutualized and split before entering the cell. As can be seen, the recycle line 26 can be split into multiple streams (e.g. one stream per electrolyser stack 12 or cell) prior to introduction into the electrolyser stack 12. The balancing line 24 and the recycle line or mutualization line 26 upstream of the pump 14 can be the same. In Figure 1, the recycle line 26 is connected to or mutualized with the pressure balancing line 24 such that the electrolyte in the balancing line 24 is recyclable to the plurality of electrolyser stacks 12 via the recycle line 26. The recycle line 26 may be a fluid conduit extending from the balance line 24 to the plurality of electrolyser stacks 12. The pump 14 may be provided along the fluid conduit of the recycle line 26.

The electrolyte can be mixed from both sides, e.g. from the hydrogen separator 2 and the oxygen separator 4 before being recirculated to the electrolyer stacks 12. It is desired to reduce and/or remove gas in the electrolyte to minimize hydrogen transferring to oxygen and oxygen transferring to hydrogen, for safety reasons. Electrolyte (e.g. potassium hydroxide in solution) can stabilize the gas microbubbles, which can prevent them from fusing and forming larger bubble that can rise quickly to the surface. Utilising a gas-liquid separation device can partially remove gas from the electrolyte, but this device alone could require an irrational residence time and/or vessel dimensions to allow for sufficient separation and gas removal, especially when scaling up an electrolysis plant to have multiple electrolyser stacks connected to the same gas-liquid separation device. For this reason, the separation can be split into multiple different equipment units, for example, one or more of the separators 2, 4 includes a gas-liquid separation device 20, 22 and a coalescing device 16, 18. The provision of one or more coalescing devices 16, 18 in combination with the gas-liquid separation devices 20, 22 can provide improved separation of the gas and liquid phases, reducing the presence of gas in the electrolyte while having more compact and rationally-sized equipment.

As can be seen in the figures, the hydrogen separator 2 includes include a hydrogen gas-liquid separation device 20, which may be referred to as a hydrogen recovery column, and a hydrogen coalescing device 16. The oxygen separator 4 includes an oxygen gas-liquid separation device 22, which may be referred to as an oxygen recovery column, and an oxygen coalescing device 18. The gas-liquid separation device 20, 22 can remove the bulk of gas and the large bubbles from the electrolyte, e.g. in the hydrogen-aqueous solution mixture or in the oxygen-aqueous solution mixture. The gas-liquid separation device 20, 22 can be a dedicated vessel or a collector/decanter. The gas-liquid separation device 20, 22 may be any suitable unit to separate gas from the electrolyte, for example the gas-liquid separation device 20, 22 may be or include a gas-liquid separation tank, a cyclone separator, a membrane separator, a density separator, a stripping column, or the like. The hydrogen gas-liquid separation device 20 and/or the oxygen gas-liquid separation device 22 may be a gravity separator.

The coalescing devices 16, 18 are configured to recover at least part of the electrolyte. The coalescing devices 16, 18 are configured to recover at least part of the electrolyte from the respective hydrogen-aqueous solution mixture or the oxygen-aqueous solution mixture. The coalescing device 16, 18 may be or include a coalescer. The coalescing device 16, 18 may be positioned downstream to the respective gas-liquid separation device 20, 22 to reach targeted electrolyte purity, for example as shown in Figure 1. In such an arrangement, a liquid outlet (e.g. containing the electrolyte) of the gas-liquid separation device 20, 22 may be fluidly coupled to the coalescing device 16, 18 via a liquid transfer pipe. A gas outlet (e.g. containing oxygen or hydrogen) of the gas-liquid separation device 20, 22 may be collected as a product, or sent for further processing (labelled H2 outlet or O2 outlet). A liquid outlet (e.g. containing the electrolyte) of the coalescing device 16, 18 may be connected to the pressure balancing line 24 and/or the recycle line 26. A gas outlet (e.g. containing oxygen or hydrogen) of the coalescing device 16, 18 may be mixed with the gas outlet of the gas-liquid separation device, or may be re-introduced into an upper region of the gas-liquid separation device 20, 22 for further processing.

In alternative arrangements, the coalescing device 16, 18 may be located upstream of the respective gas-liquid separation device 20, 22. In such an arrangement, a liquid outlet (e.g. containing the electrolyte) of the coalescing device is fluidly coupled to the gas-liquid separation device 20, 22 via a liquid transfer pipe. A gas outlet (e.g. containing oxygen or hydrogen) of the gas-liquid separation device 20, 22 and the coalescing device 16, 18 is collected as a product, or sent for further processing (labelled H2 outlet or O2 outlet). A liquid outlet of the gas-liquid separation device 20, 22 may be connected to the pressure balancing line 24 and/or the recycle line 26. It will be appreciated that a gas-liquid separation can be imperfect, and so some amount of hydrogen or oxygen may be present in the liquid outlet of any vessel and/or some amount of electrolyte may be present in the gas outlet of any vessel.

In some arrangements, one or more coalescing devices 16, 18 may be integrated with (for example provided within) the respective gas-liquid separation device 20, 22. In arrangements in which the gas-liquid separation device 20, 22 includes a collector and decanter arrangement, one or more coalescers may additionally or alternatively be positioned between the collector and decanter. The coalescing device 16, 18 can be or include any type of coalescer. An example is a membrane-type coalescer, but an ultrasonic coalescer and centrifugal coalescer, among others, are also possible. The coalescing devices 16, 18 can be implemented in an intrusive way, e.g. directly in contact with the fluid or interior of the equipment, or in a non-intrusive way, for example one or more coalescing devices such as one or more ultrasonic generators can be positioned adjacent to the outside of the equipment, for example adjacent to an external wall of the respective gas-liquid separation device. In some arrangements, the coalescing device 16, 18 includes one or more ultrasonic generators positioned along an external wall of a vessel to generate ultrasonic waves through the equipment material. The coalescing devices 16, 18 may be configured as a vessel that contains a coalescer. The coalescing devices 16, 18 may include a plurality of coalescers. The plurality of coalescers may be of the same type, or may include different types of coalescers.

A pressure control valve 28 may be provided downstream of one or more of the coalescing devices 16, 18 to provide level control therein. The pressure control valve 28 may be provided in a gas outlet line of the respective coalescing device 16, 18. In arrangements in which the coalescing device 16, 18 is provided as a vessel, providing the pressure control valve 28 in the gas outlet line facilitates control of the pressure of the gas phase in the vessel of the coalescing device 16, 18, which thereby facilitates control of the liquid level in the vessel. This can be advantageous in arrangements in which the coalescing devices 16, 18 are positioned at a lower elevation than the respective gas-liquid separation devices 20, 22, since without the control provided by the valve 28, the liquid level in the coalescing device 16, 18 may rise to be substantially aligned with the liquid level in the respective gas-liquid separation device 20, 22. A control system (not shown) may be provided to control the pressure control valve 28.

Although not shown, one or more additional coalescing devices (e.g. coalescers) may additionally or alternatively be provided at an outlet 12a, 12b of the plurality of electrolyser stacks 12 (e.g. within or along an outlet conduit or pipe between the electrolyser stack 12 and the respective gas-liquid separation device 20, 22). In some arrangements, one or more coalescing devices (e.g. coalescers) may additionally be provided along the recycle line 26, for example upstream and/or downstream of the pump 14, to reduce the gas concentration in the electrolyte prior to re-introduction into the electrolyser stacks 12.

The pressure balancing line 24 may be provided downstream of the one or more coalescing devices 16, 18. Put another way, the pressure balancing line 24 may couple the hydrogen separator 2 and the oxygen separator 4 at a point downstream of the hydrogen coalescing device 16 and the oxygen coalescing device 18. Such an arrangement reduces the risk of gas carry-over in the pressure balancing line 24 since more gas has been removed at this stage. In arrangements in which a plurality of coalescing devices 16, 18 are provided in the respective separator 2, 4, the pressure balancing line 24 may be extend from a location downstream of at least one coalescing device such that the presence of gas in the line has been at least partially reduced. In the illustrated arrangement, the pressure balancing line 24 extends between the hydrogen coalescing device and the oxygen coalescing device. It will be appreciated that the pressure balancing line 24 may extend between any component of the hydrogen separator 2 and the oxygen separator 4.

The gas-liquid separation devices 20, 22 may be horizontal separator vessels. For example, the vessel may extend to a greater degree in a horizontal direction than a vertical direction. Alternatively or additionally, vertical separator vessels can be used to offer wider liquid differential height, and a wider allowable pressure deviation from nominal operation. A vertical vessel can be seen as a vessel which extends to a greater degree in a vertical direction than in a horizontal direction. This can accommodate the potential additional pressure drop in the circuit caused by the coalescer. This piece of equipment may slowly be obstructed by impurities (potentially asymmetrically), causing differential pressure drop, which can naturally result in variation of liquid level in the vessel. In addition, vertical separator vessels will require a lower volume of liquid to move from a vessel to another for balancing the same overpressure on one side.

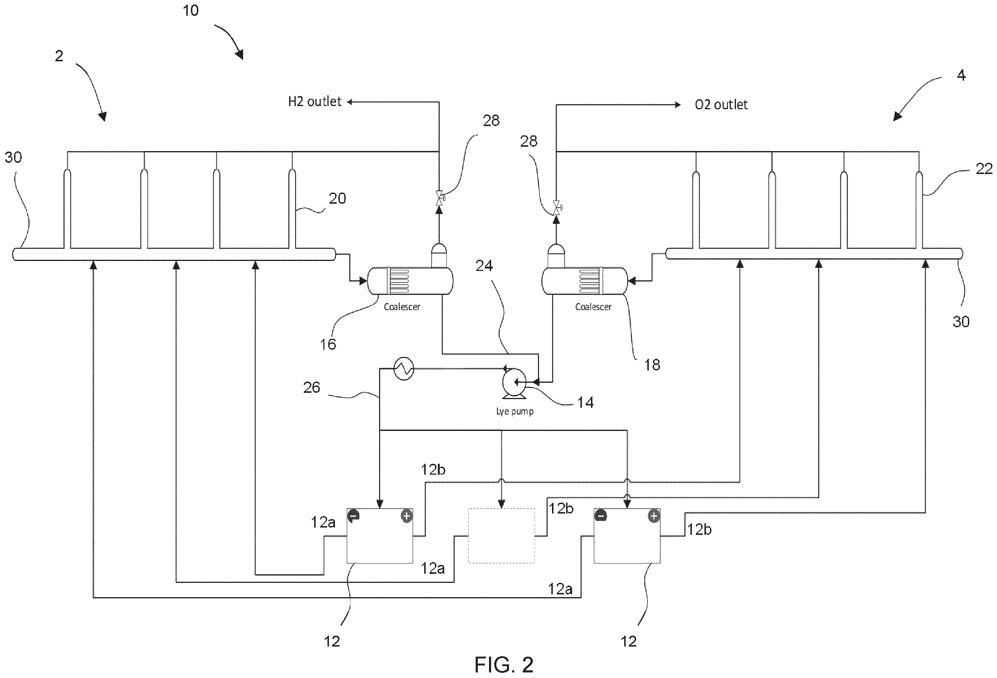

FIG. 2 is a block diagram of a hydrogen production system according to another example. The arrangement of FIG. 2 is substantially the same as that in FIG. 1 and so only the differences will be discussed in detail. In FIG. 2, a collector line 30 and a gas-liquid separation device 20, 22 are mutualized in the hydrogen separator 2 and the oxygen separator 4. A complementary coalescing device 16, 18 (e.g. coalescer) can be installed downstream of the gas-liquid separation device 20, 22.

In FIG. 2, there is shown a hydrogen production facility 10 with a series of electrolyser stacks 12 that are configured to electrolyze water and generate a hydrogen-aqueous solution mixture. The services can have an overall capacity that is greater than 40 MW. The hydrogen production facility 10 can include the series of electrolyser stacks 12, a hydrogen separator 2 having a hydrogen gas-liquid separation device 20 and a hydrogen coalescing device 16, and an oxygen separator 4 having an oxygen gas-liquid separation device 22 and an oxygen coalescing device 18. The series of electrolyser stacks 12 can electrolyze water and generate a hydrogen-aqueous solution mixture, and/or an oxygen-aqueous solution mixture. In some examples, the series of electrolyser stacks 12 can have an overall capacity greater than 40 MW. The hydrogen separator device 2 can remove the aqueous solution contained in the hydrogen-aqueous solution mixture generated by the series of electrolyser stacks 12, and can produce a flow of hydrogen. The oxygen separator 4 can remove the aqueous solution contained in the oxygen-aqueous solution generated by the series of electrolyser stacks 12 and can produce a flow of oxygen. One or more of the separators 2, 4 can include two stream-conveying lines: an upper conveying line and a lower conveying line, disposed one on top of the other. The upper conveying line can be fluidly coupled to the respective gas-liquid separation device 20, 22. The upper conveying line can be connected to the respective hydrogen or oxygen outlet of the gas-liquid separation device 20, 22. The lower conveying line can be fluidly coupled to the respective coalescing device 16, 18. The lower conveying line may include the collector line 30. In some arrangements, the upper conveying line may be fluidly coupled to one or more coalescing devices 16, 18. One or both conveying lines can be supplied with the hydrogen or oxygen-aqueous solution mixture. The conveying lines can be fluidically coupled to each other by one or more sections or gravity feed lines to allow passage of hydrogen or oxygen from the lower conveying line to the upper conveying line, or vice versa. The gravity feed lines may form part of the respective hydrogen or oxygen gas-liquid separation device 20, 22. For example, the gravity feed lines may be in the form of one or more vertical vessels that fluidly connect the lower conveying line (e.g. the collector line 30) with the upper conveying line. In such an arrangement, the hydrogen or oxygen gas-liquid separation devices 20, 22 may be seen as gravity or density separators. The distance between a respective conveying line and the respective coalescing device 16, 18 may be minimized so as to minimize the chance of a slug regime occurring in the lines.

In the hydrogen separator 2, hydrogen and aqueous solution can be separated along the gravity feed lines. The aqueous solution can descend by gravity in the lower conveying line via the sections, while the hydrogen can rise in the upper conveying line also via the sections. Descending flows may also include condensates of mostly water that form in the upper routing line. Hydrogen and aqueous solution can be separated directly in the lower conveying line, the upper conveying line and the gravity feed lines between them.

A similar arrangement can be provided on the Oxygen side of the system, in the oxygen separator 4. An upper conveying line can be fluidly coupled to the oxygen gas-liquid separation device 22. The lower conveying line can be fluidly coupled to the oxygen coalescing device 18. One or both conveying lines can be supplied with the oxygen-aqueous solution mixture. The conveying lines can be fluidically coupled to each other by one or more sections or gravity feed lines which may form part of the oxygen gas-liquid recovering device 22 to allow passage of oxygen from the lower conveying line to the upper conveying line, or vice versa. Oxygen and aqueous solution can be separated along the gravity feed lines. The aqueous solution can descend by gravity in the lower conveying line via the sections, while the oxygen can rise in the upper conveying line also via the sections. Descending flows may also include condensates of mostly water that form in the upper routing line.

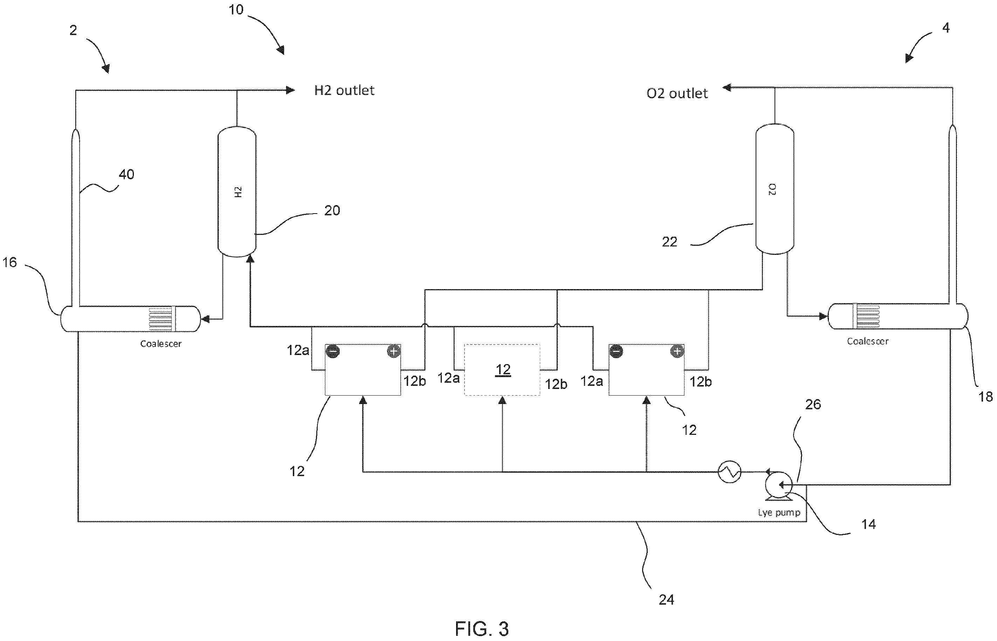

FIG. 3 is a block diagram of a hydrogen production system 10 according to another example. The facility shown in FIG. 3 is similar to FIG. 1, but does not include the pressure control valve 28 for level control in the coalescing device 16, 18. As noted above, the liquid level in the coalescing device 16, 18 may rise to be substantially aligned in a vertical direction with a liquid level in the respective gas-liquid separation device 20, 22 if the valve 28 is not present. Due to the required fluid flow through the facility 10 and the related inevitable pressure differentials, the liquid levels in the units will not be exactly the same, but will differ as a function of the amount of pressure required to provide the necessary flow. In such an arrangement, the coalescing device 16, 18 may be configured to vertically overlap with the respective gas-liquid separation device 20, 20 such that the liquid level in the coalescing device 16, 18 can vertically align with liquid level in the respective gas-liquid separation device 20, 22 without the coalescing devices 16, 18 becoming overfilled. In some arrangements, the vessel of the coalescing device 16, 18 may include a vertical extension that extends to define a region of internal volume that vertically overlaps with the liquid level in the respective gas-liquids separation device 20, 22. In some arrangements, the vessel of the coalescing device 16, 18 may include a vertical column 40 that extends to vertically overlap with at least a portion of the vertical height of the gas-liquid separation device as shown in Figure 3.

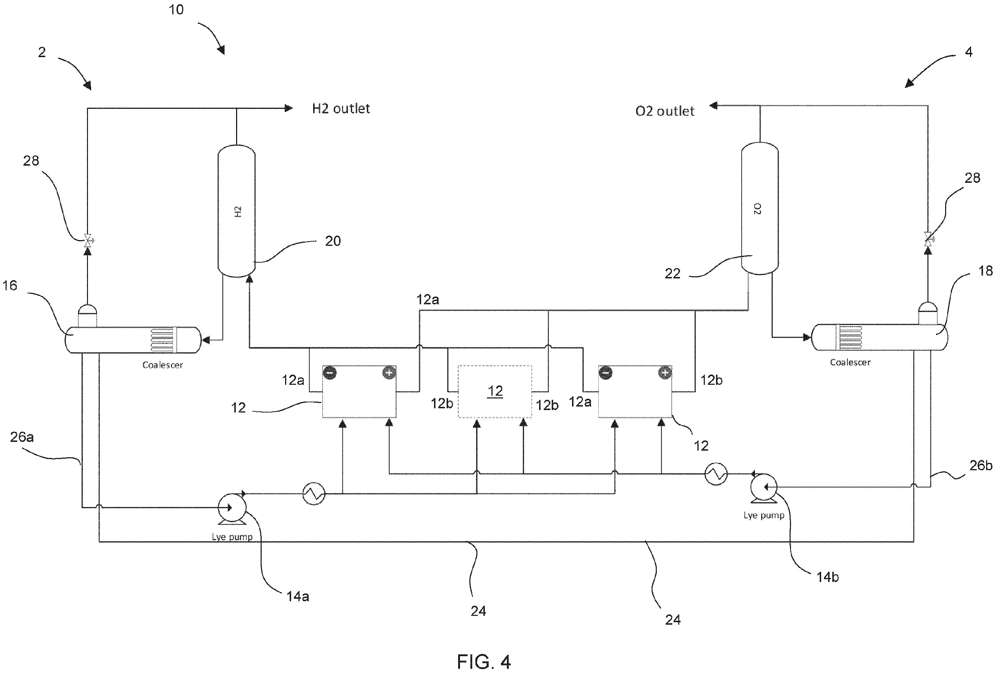

FIG. 4 is a schematic of a hydrogen production system 10 according to another example. The facility shown in FIG. 4 is similar to FIG. 1, but shows isolating both hydrogen and oxygen loops. On this scheme, pressure can be balanced upstream the electrolyser stacks 12 by any active device that is capable of doing so (e.g., valve, pump discharge pressure control, recycle, etc.). Pressure downstream the electrolyser stack 12 can be balanced using the pressure balancing line 24 outlet the coalescing devices 16, 18 or by coupling any other aqueous-solution-recovering devices in the system, such as an aqueous-solution-recovering device on the oxygen side to an aqueous-solution-recovering device on the hydrogen side of the system, either of which may be a coalescer.

The recycle line 26a may extend from the hydrogen coalescing device 16 and/or from the oxygen coalescing device 18 to the plurality of electrolyser stacks 12. In FIG. 4, the system 10 includes a first recycle line 26a that extends from (e.g. directly from) the hydrogen coalescing device 16 to the plurality of electrolyser stacks 12, and a second recycle line 26b that extends from (e.g. directly from) the oxygen coalescing device 18 to the plurality of electrolyser stacks 12. One or more of the recycle lines 26a, 26b is a fluid conduit extending from the respective coalescing device 16, 18 to the plurality of electrolyser stacks 12. A pump 14a, 14b may be provided in one or more of the fluid conduits to direct electrolyte to the electrolyser stacks 12. In the figure, the recycle lines 26a, 26b enters the respective electrolyser stack 12 separately. Such an arrangement may reduce any mixture of hydrogen and oxygen in the system 10 by keeping the recycle lines 26a, 26b separate. In alternative arrangements, the lines 26a, 26b may be combined upstream of the electrolyser stacks 12 or may each enter different side of the electrolyser stacks 12.

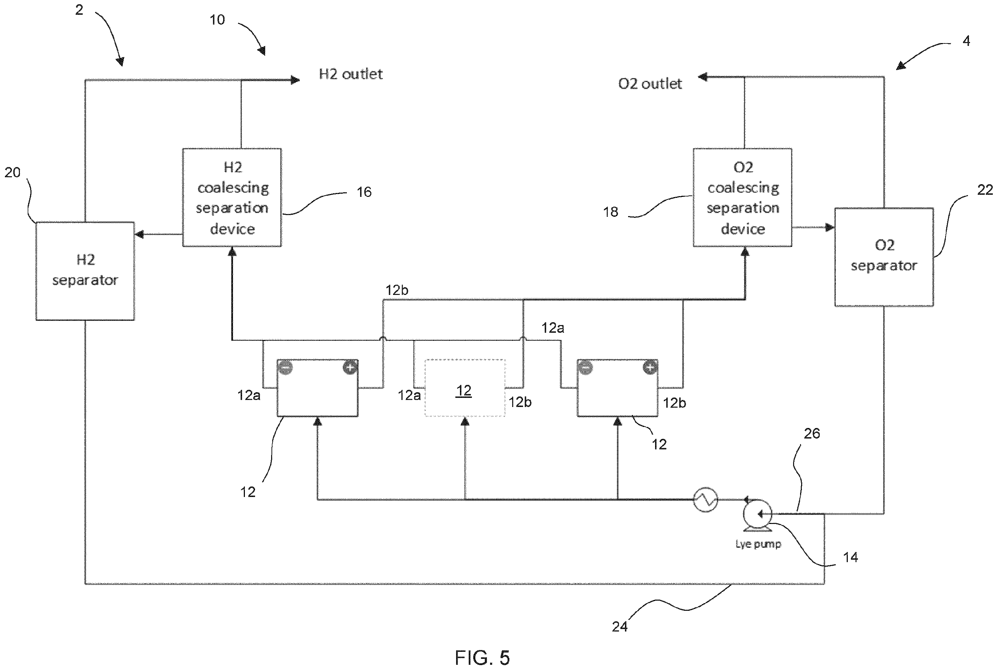

FIG. 5 is a schematic of a hydrogen production system 10 according to another example. The facility shown in FIG. 5 is similar to FIG. 1. As can be seen, in the hydrogen separator 2, the hydrogen coalescing device 16 may be positioned upstream to the hydrogen gas-liquid separation device 20. Additionally or alternatively, in the oxygen separator 4, the oxygen coalescing device 18 may be positioned upstream to the oxygen gas-liquid separation device 22.

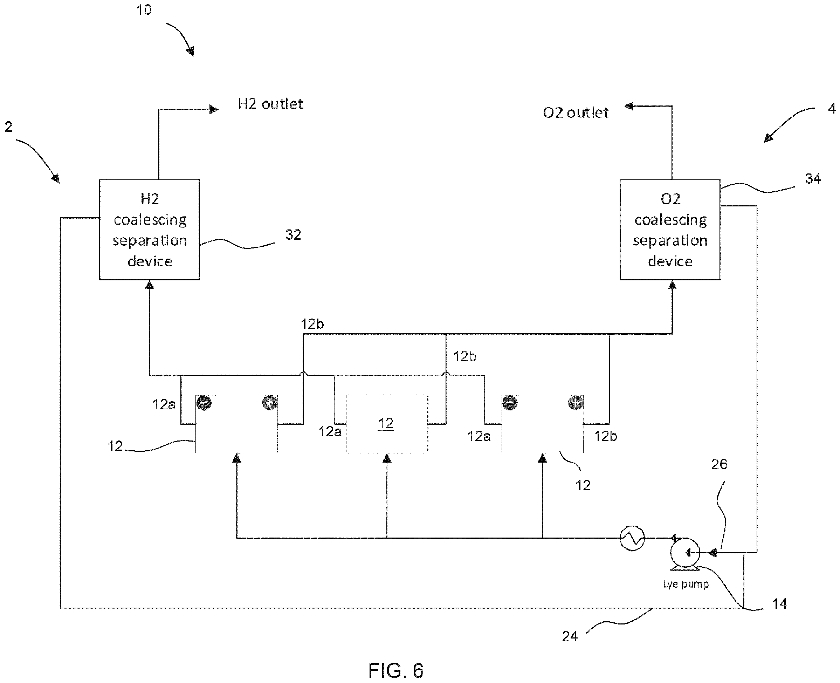

Figure 6 is a schematic of a hydrogen production system 10 according to another example. In previously illustrated arrangements, one or more of the gas-liquid separation devices 20, 22 can be provided separately to the coalescing devices 16, 18. As is illustrated in Figure 6, one or more of the gas-liquid separation devices 20, 22 can be integrated with the respective coalescing devices 16, 18. In this way, either or both of the hydrogen separator 2 and the oxygen separator 4 may include a recovery unit 32, e.g. a single recovery unit 32. The recovery unit 32 may include the functionality of both a respective gas-liquid separation device 20, 22 (i.e. to remove gas from the electrolyte) and a coalescing device 16, 18 (i.e. to recover electrolyte). One or more of the separators 2, 4 may include a gas-liquid recovery zone to remove at least some bubbles from the aqueous solution mixture and a coalescing zone to recover at least part of the electrolyte from the aqueous-solution mixture. In FIG. 6, the gas-liquid recovery zone and the coalescing zone are provided in a single or unified recovery unit 32, 34. Combining the functionality of a gas-liquid separation device 20, 22 with the respective coalescing device 16, 18 has been found to reduce plant equipment and facilitate a more compact facility design.

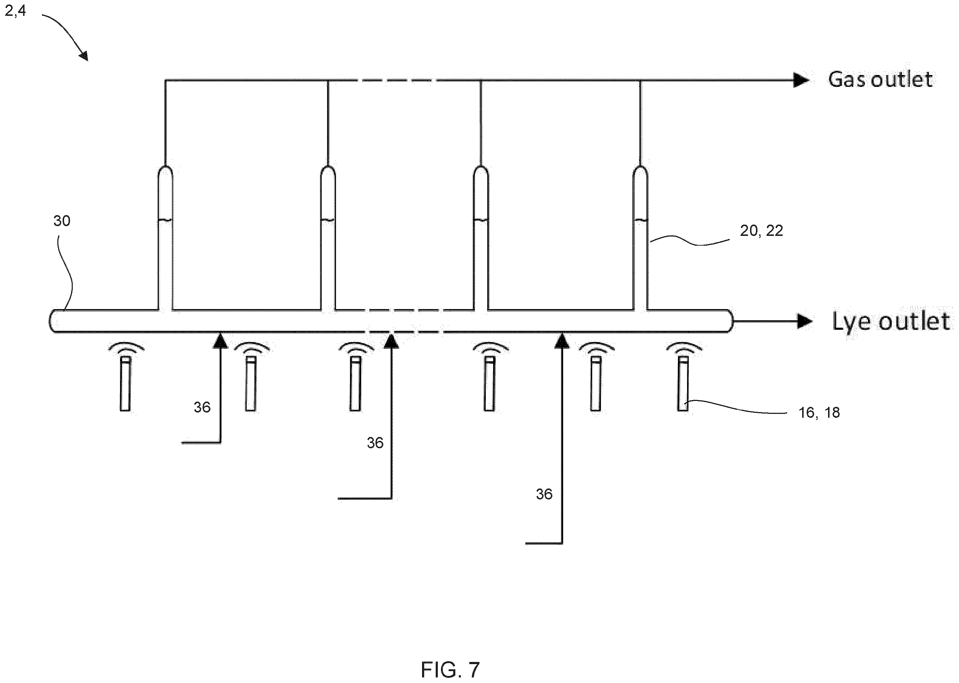

FIGs 7 to 11 illustrate example arrangements, elements of which can be incorporated into the hydrogen and/or oxygen separators 2, 4 of the hydrogen production systems described in relation to the preceding figures. The separator 2, 4 of Figures 7 to 11 may include an inlet 36. The inlet 36 of the separators 2, 4 may be fluidly connected to the hydrogen or oxygen side outlet, e.g. the first or second outlets 12a, 12b of one or more electrolyser stacks 12. The inlet 36 may be directly coupled to one or more electrolyser stacks 12 in some arrangements, e.g. such that the inlet 36 is mutualised with the first outlet 12a or the second outlet 12b. In some arrangements, the inlet 36 to the separators of Figures 7 to 11 may be connected to or mutualised with an outlet of a pre-separator (not shown) that may be configured to remove a portion of the electrolyte from the hydrogen-aqueous solution mixture or the oxygen-aqueous solution mixture obtained from the electrolyser stacks. In this way, the inlet 36 of the separators 2, 4 may include a gas-rich mixture.

The separators 2, 4 may include a gas outlet and an electrolyte outlet, e.g. labelled lye outlet in the figures. Gas obtained from the output from the electrolyser stacks and/or the pre-separator may be generated or exit the respective separator 2, 4 at the gas outlet. For example, where the separator is a hydrogen separator 2, the separator inlet from the electrolyser stacks 12 and/or pre-separator may include a hydrogen-aqueous solution mixture in operation. In this case, hydrogen separated from the hydrogen-aqueous solution mixture may be generated at the gas outlet. The gas outlet of the hydrogen separator 2 is labelled "H2 outlet" in Figures 1 to 6. Where the separator is an oxygen separator 4, the separator inlet from the electrolyser stacks 12 and/or pre-separator may include an oxygen-aqueous solution mixture in operation. In this case, oxygen separated from the oxygen-aqueous solution mixture may be generated at the gas outlet. The gas outlet of the oxygen separator 4 is labelled "O2 outlet" in Figures 1 to 6. Electrolyte obtained from the mixture output from the electrolyser stacks and/or the pre-separator may be generated or exit the respective separator 2, 4 at the lye outlet. It will be appreciated that the electrolyte in the outlet may include any substances (e.g. the electrolyte may be lye, e.g. sodium hydroxide, in some arrangements, but it will be appreciated that any suitable electrolyte may be utilized). Electrolyte separated from the hydrogen-aqueous solution mixture or the oxygen-aqueous solution mixture may exit the respective separator 2,4 at the lye outlet. The lye outlet may be fluidly coupled to a further aqueous-solution recovering device (not shown), for example a coalescer. In some arrangements, the lye outlet may be coupled to the recycle line 26, such that electrolyte present therein is recyclable to the electrolyser stacks 12 via the recycle line 26. The gas outlet may be fluidly coupled to a further separator to improve the purity of hydrogen and/or oxygen present in the gas outlet. It will be appreciated that a gas-liquid separation can be imperfect. As such, some electrolyte may be present at the gas outlet during operation and/or some gas may be present at the lye outlet during operation.

As illustrated in Figure 7, the separator 2, 4 can include a collector line 30, which may be provided in fluid communication with an outlet of one or more electrolyser stacks. The collector line 30 may be provided in fluid communication with a plurality of respective outlets of a respective plurality of electrolyser stacks. The collector line 30 may be connected to or mutualised with the respective gas-liquid separation device 20, 22 of any of the illustrated examples. The collector line 30 may be similar to the lower conveying line of Figure 2 in some arrangements. As shown in Figure 7, the gas-liquid separation device 20, 22 can include a plurality of separators or gravity feed lines located along the collector line 30. The gas-liquid separation device 20, 22 can be provided in the form of one or more vertical separators, e.g. a vertical pipe that extends in a generally vertical direction from the collector line 30 to one or more a gas outlet lines. The gas-liquid separation device 20, 22 may be a gravity separator. The gas-liquid separation device 20, 22 may be connected to or mutualised with or may include the collector line 30.

As shown in the illustrated arrangement, the coalescing device 16, 18 can be located at the collector line 30. The coalescing device 16, 18 can be provided in the form of one or more coalescers provided along the collector line 30. The coalescers may be non-intrusive, such that the coalescers are provided external to the collector line 30 and do not contact fluid therein. For example, one or more ultrasonic probes can be provided. The ultrasonic probe or probes may be provided at the collector line 30. A plurality of ultrasonic probes may be provided at different locations and with different orientations (preferably in an upward direction as shown in the FIG.7) along the collector line 30. The ultrasonic probe or probes may be provided external to the collector line 30, for example proximal an outer wall of the collector line 30. Different types of coalescers may be implemented in alternative arrangements. The collector line 30 is substantially horizontal in FIG. 7, such that the vessel extends to a greater degree in a horizontal direction than a vertical direction. In some arrangements, the coalescers may be provided along a substantially vertical line or differently angled line. The arrangement of coalescers of Figure 7 may be implemented in other areas of the system 10 in some arrangements (e.g. along other lines or the electrolyser stack). The arrangement of FIG. 7 can provide an "all-in-one" separation, in which the gas separation and electrolyte recovery occurs in a single device or in a single unified structure.

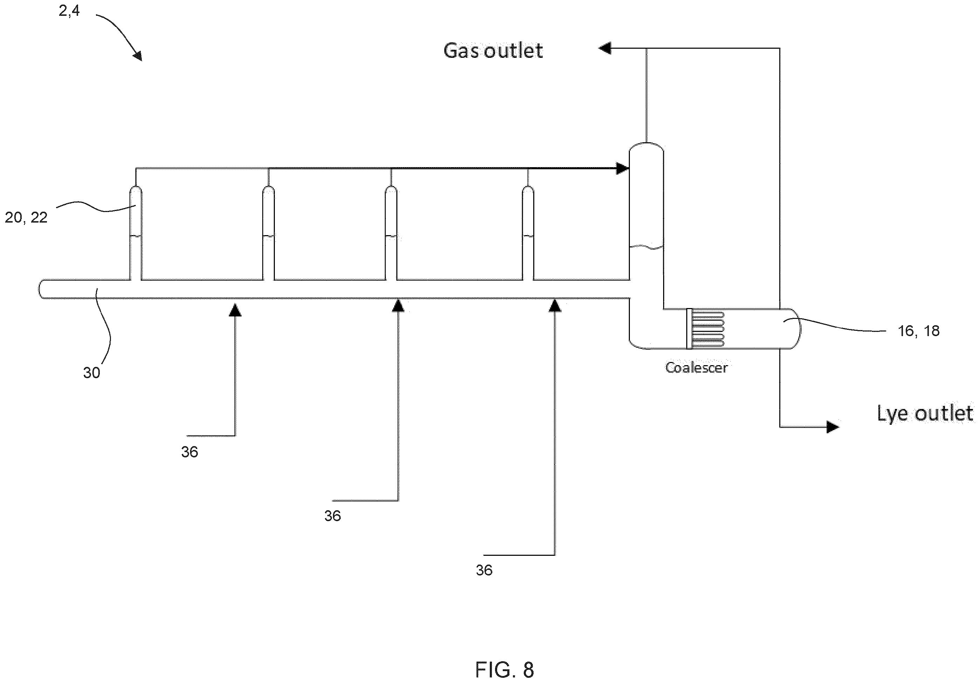

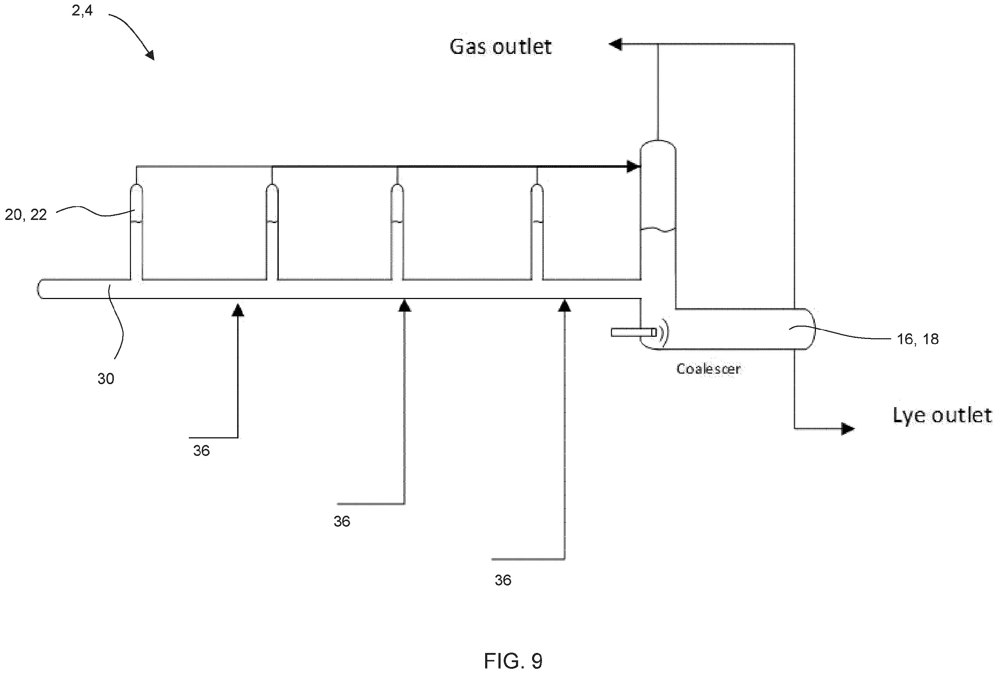

Referring to Figures 8 and 9, the separator 2, 4 can include a coalescing device 16, 18 downstream of the respective gas-liquid separation device 20, 22, e.g. downstream of the plurality of vertical separators extending from the collector line 30. The collector line 30 may be similar to the lower conveying line of Figure 2. The coalescing device 16, 18 may be connected to or mutualised with the collector line 30. In the illustrated arrangement, the coalescing device 16, 18 includes a vessel. The collector line 30 may be in fluid communication with a lower region of the vessel. The outlet line of the gas-liquid separation devices 20, 22, for example the outlet of the plurality of vertical columns that make up the respective gas-liquid separation device 20, 22, may be in fluid communication with the respective coalescing device 16, 18. In the illustrated arrangement, the outlet line of the gas-liquid separation device 20, 22 is fed into an upper region of the vessel of the coalescing device 16, 18.

The coalescing device 16, 18 may include a coalescer, e.g. a membrane coalescer. The coalescer can be provided in a lower region of a vessel, e.g. at or toward a base of the vessel. As previously discussed, the lower region of a vessel may refer to a region in which liquid (e.g. electrolyte or the aqueous mixture) has accumulated during operation of the facility 10 due to gravitational effects. In Figures 8 and 9, the coalescing device 16, 18 includes a substantially vertical portion connected to a substantially horizontal portion, so as to define a generally L-shaped vessel. One or more coalescers may be provided in the horizontal portion and/or the vertical portion. In Figure 8, a membrane coalescer is provided at a substantially horizontal portion of the vessel of the coalescing device 16, 18. In Figure 9, the coalescing device 16, 18 may include an ultrasonic coalescer, e.g. an ultrasonic probe provided in communication with a region, e.g. a lower region at or toward a base of a vessel. In this figure, the ultrasonic coalescer is located proximal the interface between the substantially vertical and the substantially horizontal portion of the vessel. The arrangement of FIG. 8 and FIG. 9 can provide an "all-in-one" separation, in which the gas separation and electrolyte recovery occurs in a single device or in a single unified structure. Alternatively or in combination, a coalescing device can be installed in the upper region of a vessel. This coalescing device could be for example a membrane or a mesh or any other coalescing device. It will be appreciated that the vessel of the coalescing device 16, 18 may be configured in any suitable form.

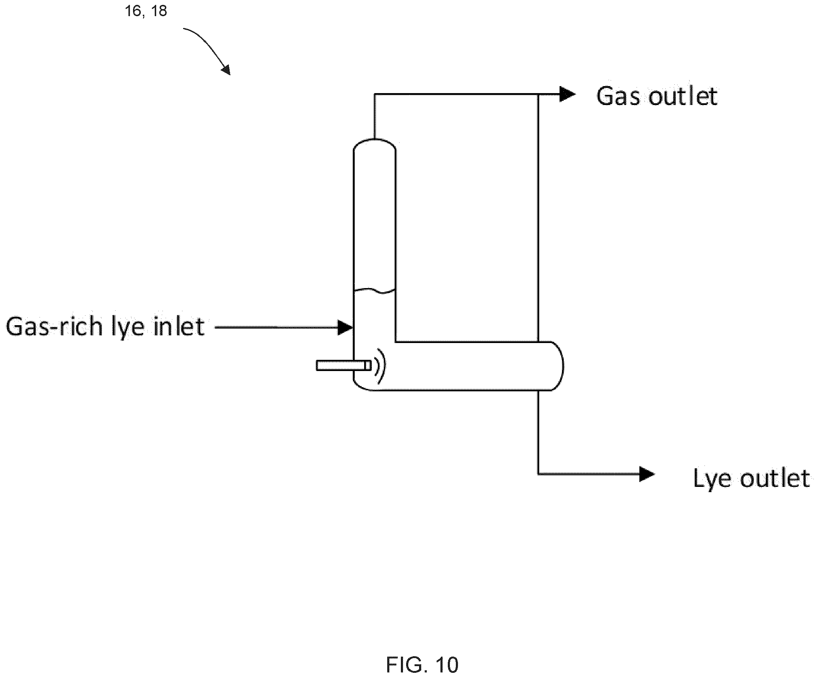

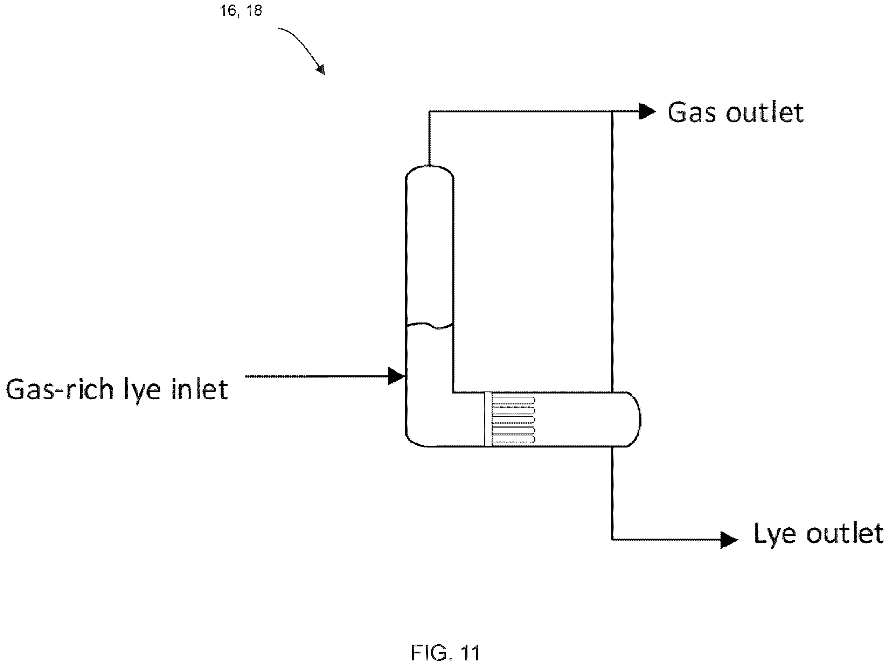

The coalescing device 16, 18 may not be connected or mutualised with the gas-liquid separation device 20, 22 and/or the collector line 30. For example, the coalescing devices 16, 18 of Figures 10 and 11 are provided as a separate unit from the gas-liquid separation device 20, 22. The coalescing devices 16, 18 of Figures 10 and 11 include one or more coalescers. As shown in Figure 10, the coalescing device 16, 18 may include an ultrasonic coalescer. As shown in Figure 11, the coalescing device 16, 18 may include a membrane coalescer. The coalescer of the coalescing device 16, 18 of Figures 8 to 11 is intrusive. In such an arrangement, the coalescer is located within an internal volume defined by a vessel of the coalescing device 16, 18. In such an arrangement, the coalescer may directly contact fluid in the vessel. In alternative arrangements, the coalescer may be non-intrusive. In such an arrangement, the coalescer may be provided external to the internal volume define by the vessel of the coalescing device 16, 18, e.g. as shown in Figure 7.

It will be appreciated that any elements of the separating arrangements indicated in Figures 7 to 11 may be implemented in the arrangements of Figures 1 to 6.

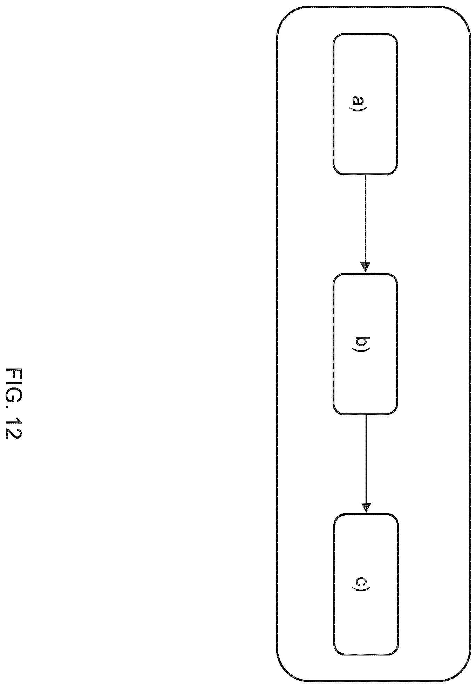

A method is illustrated in Figure 12 as a flow chart. The method includes the following steps:
a) generating a hydrogen-aqueous solution mixture and an oxygen-aqueous solution mixture using a plurality of electrolyser stacks 12 to electrolyze water using an electrolyte;
b) producing a flow of hydrogen from the hydrogen-aqueous solution mixture using a hydrogen separator 2; and
c) producing a flow of oxygen from the oxygen-aqueous solution mixture using an oxygen separator 4.

One or both of the hydrogen separator 2 and oxygen separator 4 includes a gas-liquid separation device and a coalescing device. The method may further include preventing or reducing a pressure differential across at least one membrane of the electrolyser stack 12 by using a pressure balancing line 24 to couple a hydrogen separator 2 with an oxygen separator 4. It will be appreciated that the apparatus referred to in the method may include any elements or combinations thereof discussed in relation to Figures 1 to 11.

The above arrangements have been described in the context of a production facility with a plurality of electrolyser stacks 12. It will be understood that the hydrogen production facility 10 may include a single electrolyser stack 12 in some arrangements. An electrolyser stack can have a capacity of between about 1 MW and 10 MW, for example 1 MW, 2MW, 3 MW, 4MW, 5MW, 6MW, 7MW, 8MW, 9MW, 10MW. In arrangements in which multiple stacks are provided, the capacity of the facility 10 can be multiplied by any multiple based on the number of electrolyser stacks 12 and their individual capacities. For example, five 1 MW stack provides a total capacity of 5 MW, five 4 MW stacks provides a total capacity of 20 MW, six 8 MW stacks provides a total capacity of 48 MW, eight 5 MW stacks provide a total capacity of 40 MW, four 10 MW stacks provides a total capacity of 40 MW. In some arrangements, a mixture of stacks having a different capacity may be used, for example two 5 MW stacks and three 8 MW stacks provides a total capacity of 34 MW. The skilled reader would appreciate that by multiplying capacities of individual stacks by a chosen number of stacks, a range of chosen output capacities can be achieved. It will be understood that the hydrogen production facility 10 may include one or more hydrogen separators 2 and one or more oxygen separators 4 including any combination of the features described herein. One or more of the hydrogen separators 2 and oxygen separators 4 may be coupled with at least one electrolyser stack 12. In some arrangements, each separator 2, 4 may be coupled with at least one electrolyser stack 12.

The foregoing description of the disclosure, including illustrated aspects and examples has been presented only for the purpose of illustration and description and is not intended to be exhaustive or to limit the disclosure to the precise forms disclosed. Numerous modifications, adaptations, and uses thereof will be apparent to those skilled in the art without departing from the scope of this disclosure. Aspects and features from each disclosed example may be combined with any other example.

## Claims

1. A hydrogen production facility comprising:
one or more electrolyser stacks to electrolyze water using an electrolyte and generate a hydrogen-aqueous solution mixture and an oxygen-aqueous solution mixture, the one or more electrolyser stacks comprising a plurality of membranes;
a hydrogen separator to produce a flow of hydrogen from the hydrogen-aqueous solution mixture; and
an oxygen separator to produce a flow of oxygen from the oxygen-aqueous solution mixture;
wherein the hydrogen separator comprises a hydrogen gas-liquid separation device and a hydrogen coalescing device, and wherein the oxygen separator comprises an oxygen gas-liquid separation device and an oxygen coalescing device.

2. The hydrogen production facility of claim 1, wherein the hydrogen separator and the oxygen separator are coupled using a pressure balancing line to balance pressure between the oxygen separator and the hydrogen separator and to prevent or reduce a pressure differential across the plurality of membranes.

3. The hydrogen production facility of claim 2, wherein the pressure balancing line couples the hydrogen separator and the oxygen separator at a point downstream of the hydrogen coalescing device and the oxygen coalescing device.

4. The hydrogen production facility of any of the preceding claims, wherein the hydrogen coalescing device and/or the oxygen coalescing device is or comprises at least one of: a membrane-type coalescer, an ultrasonic coalescer, or a centrifugal coalescer.

5. The hydrogen production facility of any of the preceding claims, wherein the hydrogen gas-liquid separation device and/or the oxygen gas-liquid separation device comprises a gravity separator.

6. The hydrogen production facility of any of the preceding claims, wherein the hydrogen coalescing device is positioned downstream to the hydrogen gas-liquid separation device and/or wherein the oxygen coalescing device is positioned downstream to the oxygen gas-liquid separation device.

7. The hydrogen production facility of any of claims 1 to 5, wherein the hydrogen coalescing device is positioned upstream to the hydrogen gas-liquid separation device and/or wherein the oxygen coalescing device is positioned upstream to the oxygen gas-liquid separation device.

8. The hydrogen production facility of any of claims 1 to 5, wherein the hydrogen coalescing device is integrated with the hydrogen gas-liquid separation device and/or wherein the oxygen coalescing device is integrated with the oxygen gas-liquid separation device.

9. The hydrogen production facility of claim 8, wherein the hydrogen coalescing device comprises one or more ultrasonic generators provided adjacent an external wall of the hydrogen gas-liquid separation device and/or wherein the oxygen coalescing device comprises one or more ultrasonic generators provided adjacent an external wall of the oxygen gas-liquid separation device.

10. The hydrogen production facility of claim 2 or claim 3, wherein the pressure balancing line extends between an outlet of the hydrogen separator and an outlet of the oxygen separator such that said outlet of the hydrogen separator is fluidly coupled to said outlet of the oxygen separator via the pressure balancing line.

11. The hydrogen production facility of any of claims 2, 3 or 10, wherein the pressure balancing line to balance pressure between the oxygen separator and the hydrogen separator is positionable to couple at a lower portion of at least one of the oxygen separator and the hydrogen separator.

12. The hydrogen production facility according to any of claims 2, 3, 10 or 11, wherein the pressure balancing line extends between the hydrogen coalescing device and the oxygen coalescing device.

13. The hydrogen production facility of any preceding claims, wherein the hydrogen gas-liquid separation device and/or the oxygen gas-liquid separation device is or comprises a vertical separator vessel.

14. The hydrogen production facility of any preceding claims, further comprising a collector line mutualized with the hydrogen gas-liquid separation device and/or the oxygen gas-liquid separation device.

15. A method comprising:
generating a hydrogen-aqueous solution mixture and an oxygen-aqueous solution mixture using one or more electrolyser stacks to electrolyze water using an electrolyte;
producing a flow of hydrogen from the hydrogen-aqueous solution mixture using a hydrogen separator; and
producing a flow of oxygen from the oxygen-aqueous solution mixture using an oxygen separator;
wherein the hydrogen separator comprises a hydrogen gas-liquid separation device and a hydrogen coalescing device, and wherein the oxygen separator comprises an oxygen gas-liquid separation device and an oxygen coalescing device.
